# EUROPÄISCHE PATENTSCHRIFT

(11) **EP 3 569 764 B1**
(45) Veröffentlichungstag und Bekanntmachung des Hinweises auf die Patenterteilung: **28.07.2021**
(21) Anmeldenummer: 18172399.0
(22) Anmeldetag: 15.05.2018
(51) Int. Cl.: E01C 19/48, B60W 50/00, B60W 10/30, B60K 11/02

(54) **VERFAHREN ZUM VORAUSSCHAUENDEN STEUERN EINES STRASSENFERTIGERS**
METHOD FOR PREDICTIVE CONTROL OF A ROAD PAVER
PROCÉDÉ DE COMMANDE DE MANIÈRE ANTICIPÉE D'UNE FINISSEUSE DE ROUTE

(43) Veröffentlichungstag der Anmeldung: 20.11.2019
(73) Patentinhaber: Joseph Vögele AG, 67067 Ludwigshafen (DE)
(72) Erfinder: NOLL, Tobias, 76835 Roschbach (DE)
(74) Vertreter: Grünecker Patent- und Rechtsanwälte PartG mbB

(56) Entgegenhaltungen:
- EP-A1- 2 256 248
- EP-A1- 2 281 947
- WO-A1-2011/014473
- WO-A1-2013/034729
- WO-A1-2014/124545

## Beschreibung

Die Erfindung betrifft ein Verfahren zum Steuern eines Straßenfertigers.

Straßenfertiger sind Baufahrzeuge zum Einbau eines Fahrbahnbelags auf einem Planum. Üblicherweise umfassen Straßenfertiger einen in Einbaufahrtrichtung des Straßenfertigers vorne gelegenen Gutbunker zur Aufnahme von Einbaugut. Über Transportmittel, beispielsweise Kratzerbänder, wird das Einbaugut aus dem Gutbunker entgegen der Einbaufahrtrichtung in einen hinteren Bereich des Straßenfertigers transportiert. Dort wird das Einbaugut mittels einer Querverteilvorrichtung, beispielsweise einer Verteilerschnecke, quer zur Einbaufahrtrichtung verteilt und einer mittels Zugholmen von dem Straßenfertiger hinter der Querverteilvorrichtung hergezogenen Einbaubohle vorgelegt. Die Einbaubohle dient zum Glätten und Verdichten des aufgebrachten Einbauguts und kann beispielsweise Stampfeinrichtungen, vibrierende Glättbleche und/oder Pressleisten aufweisen.

Straßenfertiger werden in der Regel von einem Verbrennungsmotor, insbesondere einem Dieselmotor angetrieben. Neben der Antriebsleistung für die Fahrfunktion des Straßenfertigers stellt der Verbrennungsmotor auch Leistung für Arbeitsaggregate und weitere Komponenten des Straßenfertigers zur Verfügung. Beispielsweise kann der Verbrennungsmotor einen Generator antreiben, welcher Strom zum Betrieb einer Vielzahl von Komponenten des Straßenfertigers erzeugt. Insbesondere kann mit von dem Generator erzeugten Strom eine elektrische Bohlenheizung betrieben werden, mit der die Einbaubohle beheizt wird, um ein Erkalten und Erstarren des heißen Einbauguts an der Einbaubohle zu vermeiden. Auch Hydrauliksysteme des Straßenfertigers können von dem Verbrennungsmotor direkt oder über den Generator mit Energie versorgt werden. Zum Kühlen des Verbrennungsmotors im Betrieb ist ein Kühlsystem vorgesehen, in dem ein insbesondere flüssiges Kühlmedium Abwärme des Verbrennungsmotors aufnimmt. Das Kühlmedium wird durch einen von einem Lüfter erzeugten Kühlluftstrom gekühlt.

Aus der EP 2 281 947 A1 ist ein Verfahren zum kraftstoffsparenden Betreiben eines Straßenfertigers bekannt. Wenn der Straßenfertiger vor Beginn des Einbaus oder während einer Einbaupause auf das Eintreffen eines LKWs mit Einbaugut wartet, bleibt der Dieselmotor des Straßenfertigers abgeschaltet, um keinen Kraftstoff zu verbrauchen. Damit ist auch die Bohlenheizung des Straßenfertigers inaktiv. Der Straßenfertiger bestimmt mittels eines Ortungs- und Navigationssystems die Position des sich nähernden LKWs und ermittelt daraus die erwartete Ankunftszeit des Einbaumischguts. In einer Steuerung des Straßenfertigers sind Informationen darüber hinterlegt, welche Zeitspanne zum Aufheizen der Einbaubohle auf Betriebstemperatur notwendig ist. Dies ermöglicht es der Steuerung, den Dieselmotor zu einem geeigneten Zeitpunkt einzuschalten, so dass genau beim Eintreffen des LKWs die erforderliche Betriebstemperatur erreicht wird. Auf diese Weise werden unnötig lange Aufheizphasen vermieden, wobei trotzdem unmittelbar nach Eintreffen des Einbauguts die Einbaufahrt aufgenommen werden kann. Obwohl durch das Vermeiden unnötiger Aufheizzeiten der Kraftstoffverbrauch des Straßenfertigers reduziert werden kann, besteht noch Raum für weitere Verbesserungen der Energieeffizienz des Straßenfertigers.

Es ist Aufgabe der Erfindung, ein Verfahren zum Steuern eines Straßenfertigers mit verbesserter Energieeffizienz bereitzustellen.

Diese Aufgabe wird durch den Gegenstand von Anspruch 1 gelöst. Die abhängigen Ansprüche geben vorteilhafte Ausführungsformen an.

Der Erfindung liegt ein erfinderisches Prinzip zugrunde, welches auf einer vorausschauenden Steuerung von energieverbrauchenden Komponenten des Straßenfertigers beruht.

Gemäß der Erfindung wird ein Verfahren zum Steuern eines Straßenfertigers angegeben, welcher ein Primärantriebsaggregat, einen in Einbaufahrtrichtung des Straßenfertigers vorne gelegenen Gutbunker zur Aufnahme von Einbaugut und eine in Einbaufahrtrichtung hinten gelegene Einbaubohle zum Verdichten des Einbauguts umfasst. Das Primärantriebsaggregat kann beispielsweise als Verbrennungsmotor, insbesondere Dieselmotor, ausgebildet sein. Die Einbaubohle umfasst eine Bohlenheizung, die mit von dem Primärantriebsaggregat erzeugter Energie betreibbar ist. Vorzugsweise handelt es sich bei der Bohlenheizung um eine elektrische Bohlenheizung mit elektrischen Widerstandsheizelementen, die mittels eines Generators von dem Primärantriebsaggregat mit Energie versorgt wird.

Im (normalen) Einbaubetrieb des Straßenfertigers wird die Bohlenheizung zum Beheizen der Einbaubohle durch Regeln einer Temperatur der Einbaubohle auf einen vorbestimmten Bohlen-Betriebstemperaturwert oder in einen vorbestimmten Bohlen-Betriebstemperaturbereich betrieben. Der Bohlen-Betriebstemperaturwert beziehungsweise der Bohlen-Betriebstemperaturbereich können insbesondere zumindest im Wesentlichen einer Temperatur des heißen Einbauguts entsprechen beziehungsweise diese umfassen.

Erfindungsgemäß wird ein zukünftiger Betriebszustand erhöhten Energiebedarfs des Straßenfertigers von dem Straßenfertiger vorausschauend erkannt. Der Straßenfertiger kann den zukünftiger Betriebszustand erhöhten Energiebedarfs beispielsweise basierend auf einem Detektieren oder Erhalten von Daten, durch Berechnung und/oder basierend auf einer Benutzereingabe erkennen.

Wenn ein zukünftiger Betriebszustand erhöhten Energiebedarfs erkannt wurde, wird die Bohlenheizung zum Beheizen der Einbaubohle über den vorbestimmten Bohlen-Betriebstemperaturwert oder den vorbestimmten Bohlen-Betriebstemperaturbereich hinaus angesteuert. Die Einbaubohle wird in diesem Fall gewissermaßen auf eine eigentlich zu hohe Temperatur geheizt. Dies kann insbesondere automatisiert erfolgen. Wenn der Betriebszustand des erhöhten Energiebedarfs dann eintritt, wird die Bohlenheizung zumindest vorrübergehend deaktiviert. Auch das Deaktivieren der Bohlenheizung kann automatisiert erfolgen. Da die Einbaubohle zuvor bereits über den im normalen Einbaubetrieb verwendeten Bohlen-Betriebstemperaturwert oder Bohlen-Betriebstemperaturbereich hinaus beheizt wurde, führt das Deaktivieren der Bohlenheizung bei Eintritt des Betriebszustands erhöhten Energiebedarfs nicht gleich zu einer kritischen Verringerung der Temperatur der Einbaubohle. Die Einbaubohle kühlt zwar ab, ist aber aufgrund des vorangegangenen Überheizens für eine gewisse Zeit immer noch warm genug, dass das Einbaugut nicht an der Einbaubohle erstarrt und an diese anklebt.

Durch das Deaktivieren der Bohlenheizung bei Eintritt des Betriebszustands erhöhten Energiebedarfs wird das Primärantriebsaggregat entlastet. Auf diese Art und Weise können Lastspitzen abgefangen werden. Somit ist es möglich, ein kleineres Primärantriebsaggregat zu verwenden. Zudem kann das Primärantriebsaggregat über größere Zeitbereiche hinweg in seinem optimalen Betriebsbereich laufen und hierdurch besonders Energieeffizient arbeiten. Durch das beschrieben Verfahren wird der Straßenfertiger vorausschauend gesteuert, indem bereits vor Eintritt des Betriebszustands erhöhten Energiebedarfs zusätzliche Energie in das Überheizen der Einbaubohle gesteckt wird, um die Bohlenheizung bei Eintritt des Betriebszustands erhöhten Energiebedarfs abschalten zu können.

Vorzugsweise umfasst das vorausschauende Erkennen des zukünftigen Betriebszustands erhöhten Energiebedarfs ein Erkennen eines voraussichtlichen Eintrittszeitpunkts des Betriebszustands erhöhten Energiebedarfs. Bei Kenntnis des voraussichtlichen Eintrittszeitpunkts des Betriebszustands erhöhten Energiebedarfs lässt sich die vorausschauende Steuerung des Straßenfertigers besonders gut an die jeweilige Betriebssituation anpassen.

Das Betreiben der Bohlenheizung zum Beheizen der Einbaubohle über den vorbestimmten Bohlen-Betriebstemperaturwert oder den vorbestimmten Bohlen-Betriebstemperaturbereich hinaus kann vor dem voraussichtlichen Eintrittszeitpunkt des Betriebszustands erhöhten Energiebedarfs starten.

Eine Startzeit des Beheizens der Bohlenheizung über den vorbestimmten Bohlen-Betriebstemperaturwert oder den vorbestimmten Bohlen-Betriebstemperaturbereich hinaus kann basierend auf dem voraussichtlichen Eintrittszeitpunkt des Betriebszustands erhöhten Energiebedarfs bestimmt werden. So kann gewährleistet werden, dass die Einbaubohle bei Eintritt des Betriebszustands erhöhten Energiebedarfs ausreichend aufgeheizt ist, das Beheizen über den vorbestimmten Bohlen-Betriebstemperaturwert oder den vorbestimmten Bohlen-Betriebstemperaturbereich hinaus aber auch nicht unnötig früh erfolgt.

Nachdem die Bohlenheizung bei Eintritt des Betriebszustands erhöhten Energiebedarfs deaktiviert wurde, kann die Bohlenheizung wieder zum Aktivieren freigegeben werden, wenn der Betriebszustand erhöhten Energiebedarfs vorüber ist. Durch ein Verhindern des Aktivierens der Bohlenheizung während des Betriebszustands erhöhten Energiebedarfs kann sichergestellt werden, dass Leistungsspitzen des Primärantriebsaggregats vermieden werden. Nach Beendigung des Betriebszustands erhöhten Energiebedarfs kann die normale Regelung der Bohlenheizung für den normalen Einbaubetrieb aktiviert werden.

Vorzugsweise wird die Bohlenheizung nach dem bei Eintritt des Betriebszustands erhöhten Energiebedarfs erfolgten Deaktivieren wieder aktiviert, wenn der vorbestimmte Bohlen-Betriebstemperaturwert oder der vorbestimmte Bohlen-Betriebstemperaturbereich unterschritten wird. So wird in jedem Fall gewährleistet, dass die Einbaubohle nicht zu stark abkühlt. Gemäß einer Ausführungsform kann die Bohlenheizung bei Unterschreiten des vorbestimmten Bohlen-Betriebstemperaturwerts oder des vorbestimmten Bohlen-Betriebstemperaturbereichs wieder aktiviert werden, auch wenn der Betriebszustand erhöhten Energiebedarfs noch andauert. Dies kann insbesondere bei lang andauernden Zuständen erhöhten Energiebedarfs relevant sein.

Es wäre auch denkbar, dass die Bohlenheizung nach Ablauf einer vorbestimmten Zeitspanne ab dem Deaktivieren bei Eintritt des Betriebszustands erhöhten Energiebedarfs wieder aktiviert wird.

Der Straßenfertiger kann zudem ein Kühlsystem umfassen. Das Kühlsystem umfasst ein Kühlmedium sowie einen durch von dem Primärantriebsaggregat erzeugte Energie betreibbaren Lüfter zum Erzeugen eines Kühlluftstroms zum Kühlen des Kühlmediums. Das Kühlmedium kann beispielsweise eine Kühlflüssigkeit oder einen Kühlkörper umfassen. Das Kühlmedium kann insbesondere mit dem Primärantriebsaggregat und/oder anderen Komponenten des Straßenfertigers, wie beispielsweise Hydrauliksystemen, in Wärmeaustausch stehen, um das Primärantriebsaggregat und/oder die anderen Komponenten zu kühlen.

Im (normalen) Einbaubetrieb des Straßenfertigers wird der Lüfter so betrieben, dass eine Temperatur des Kühlmediums auf einen vorbestimmten Kühlmedium-Betriebstemperaturwert oder in einen vorbestimmten Kühlmedium-Betriebstemperaturbereich geregelt wird. Der vorbestimmte Kühlmedium-Betriebstemperaturwert beziehungsweise der vorbestimmte Kühlmedium-Betriebstemperaturbereich kann so gewählt werden, dass von dem Kühlsystem gekühlte Komponenten des Straßenfertigers eine ausreichende Kühlung erfahren.

Wenn ein zukünftiger Betriebszustand erhöhten Energiebedarfs erkannt wurde, wird der Lüfter zum Kühlen des Kühlmediums unter den vorbestimmten Kühlmedium-Betriebstemperaturwert oder den vorbestimmten Kühlmedium-Betriebstemperaturbereich betrieben. Das Kühlmedium wird also gewissermaßen stärker als im normalen Betrieb gekühlt. Dies kann insbesondere automatisiert erfolgen. Bei Eintritt des Betriebszustands erhöhten Energiebedarfs wird der Lüfter dann zumindest vorübergehend deaktiviert. Auch das Deaktivieren des Lüfters kann automatisiert erfolgen. Da das Kühlmedium vor dem Deaktivieren des Lüfters stärker als im normalen Betrieb gekühlt wurde, führt ein Erwärmen des Kühlmediums nach dem Deaktivieren des Lüfters nicht gleich zu einer Überhitzung der zu kühlenden Komponenten.

Das durch das vorausschauende Überkühlen des Kühlmediums ermöglichte Deaktivieren des Lüfters bei Eintritt des Betriebszustands erhöhten Energiebedarfs entlastet das Primärantriebsaggregat in dem Betriebszustand erhöhten Energiebedarfs und kann so Leistungsspitzen abfangen. Somit kann das erfindungsgemäße Verfahren sogar das Verwenden eines kleineren Primärantriebsaggregats erlauben. Durch das Abfangen der Leistungsspitzen kann das Primärantriebsaggregat zudem länger in einem optimalen Betriebsbereich laufen, wodurch die Energieeffizienz erhöht wird.

Das vorausschauende Erkennen des zukünftigen Betriebszustands erhöhten Energiebedarfs umfasst vorzugsweise das Erkennen eines voraussichtlichen Eintrittszeitpunkts des Betriebszustands erhöhten Energiebedarfs.

Das Betreiben des Lüfters zum Kühlen des Kühlmediums unter den vorbestimmten Kühlmedium-Betriebstemperaturwert oder den vorbestimmten Kühlmedium-Betriebstemperaturbereich kann vor dem voraussichtlichen Eintrittszeitpunkt des Betriebszustands erhöhten Energiebedarfs starten.

Eine Startzeit des Betreibens des Lüfters zum Kühlen des Kühlmediums unter den vorbestimmten Kühlmedium-Betriebstemperaturwert oder den vorbestimmten Kühlmedium-Betriebstemperaturbereich kann basierend auf den voraussichtlichen Eintrittszeitpunkt des Betriebszustands erhöhten Energiebedarf bestimmt werden.

Der Lüfter kann nach dem beim Eintritt des Betriebszustands erhöhten Energiebedarfs erfolgten Deaktivieren wieder zum Aktivieren freigegeben werden, wenn der Betriebszustand erhöhten Energiebedarfs vorüber ist.

Der Lüfter kann nach dem Deaktivieren wieder aktiviert werden, wenn der vorbestimmte Kühlmedium-Betriebstemperaturwert oder der vorbestimmte Kühlmedium-Betriebstemperaturbereich überschritten wird. Insbesondere kann der Lüfter bei einem Überschreiten des vorbestimmten Kühlmedium-Betriebstemperaturwerts oder des vorbestimmten Kühlmedium-Betriebstemperaturbereichs auch dann wieder aktiviert werden, wenn der Zustand erhöhten Energiebedarfs noch andauert.

Auch ein Reaktivieren des Lüfters nach Ablauf einer vorbestimmten Zeitspanne ab dem Deaktivieren bei Eintritt des Betriebszustands erhöhten Energiebedarfs ist denkbar.

Die Erfindung basiert auf dem Prinzip, eine zu beheizende Komponente (Einbaubohle) und optional eine zu kühlende Komponente (Kühlmedium) des Straßenfertigers bei Bedarf vorausschauend zu überheizen, beziehungsweise zu unterkühlen. Unter Ausnutzung der Wärmekapazität der Einbaubohle beziehungsweise des Kühlmediums wird so ein Deaktivieren der Bohlenheizung, beziehungsweise des Lüfters bei Eintritt des Betriebszustands erhöhten Energiebedarfs ermöglicht, um die Energieeffizienz des Straßenfertigers zu erhöhen.

Erfindungsgemäß kann der zukünftige Betriebszustand erhöhten Energiebedarfs beispielsweise einen Beginn eines Einbauvorgangs oder ein Bergauffahren des Straßenfertigers umfassen. Zu Beginn eines Einbauvorgangs ist der Energiebedarf des Straßenfertigers aufgrund einer Mehrzahl von Aspekten erhöht. Besonders relevant ist hier, dass zu Beginn des Einbauvorgangs das Fördern von Einbaugut aus dem Gutbunker in den hinteren Bereich des Straßenfertigers anlaufen muss und der Materialstrom des Einbauguts in Bewegung gesetzt werden muss. Zudem muss der Straßenfertiger zu Beginn des Einbauvorgangs beschleunigt werden. Beim Bergauffahren des Straßenfertigers ergibt sich der erhöhte Energiebedarf aus dem erhöhten Energiebedarf des Fahrantriebs des Straßenfertigers.

Das vorausschauende Erkennen des zukünftigen Betriebszustands erhöhten Energiebedarfs kann das Erkennen oder Empfangen einer voraussichtlichen Ankunftszeit eines LKWs zum Beschicken des Straßenfertigers mit Einbaugut umfassen. Die Ankunft eines solchen LKWs kann insbesondere dann, wenn der Straßenfertiger für den Beginn oder das Fortsetzen eines Einbauvorgangs auf Einbaugut wartet, ein Anzeichen dafür sein, wann der zu Beginn eines Einbauvorgangs vorliegende erhöhte Energiebedarf zu erwarten ist.

Das vorausschauende Erkennen des zukünftigen Betriebszustands erhöhten Energiebedarfs könnte alternativ oder zusätzlich auch das Erhalten oder Auswerten von Planungs- oder Streckendaten umfassen. So könnte beispielsweise ein Bergauffahren des Straßenfertigers vorausgesagt werden.

Das vorausschauende Steuern der Bohlenheizung und das vorausschauende Steuern des Kühlsystems können kombiniert und zusammen durchgeführt werden. So kann die Energieeffizienz des Straßenfertigers weiter erhöht werden.

Im Folgenden soll die Erfindung anhand eines Ausführungsbeispiels unter Bezugnahme auf die beigefügten Figuren näher erläutert werden. Dabei zeigt:
- Figur 1: eine schematische Darstellung eines Straßenfertigers gemäß einer Ausführungsform, bei der das vorausschauende Steuern der Bohlenheizung und das vorausschauende Steuern des Kühlsystems gleichzeitig realisiert sind; und
- Figur 2: ein Blockdiagramm zur Illustration des Zusammenspiels unterschiedlicher Komponenten des Straßenfertigers.

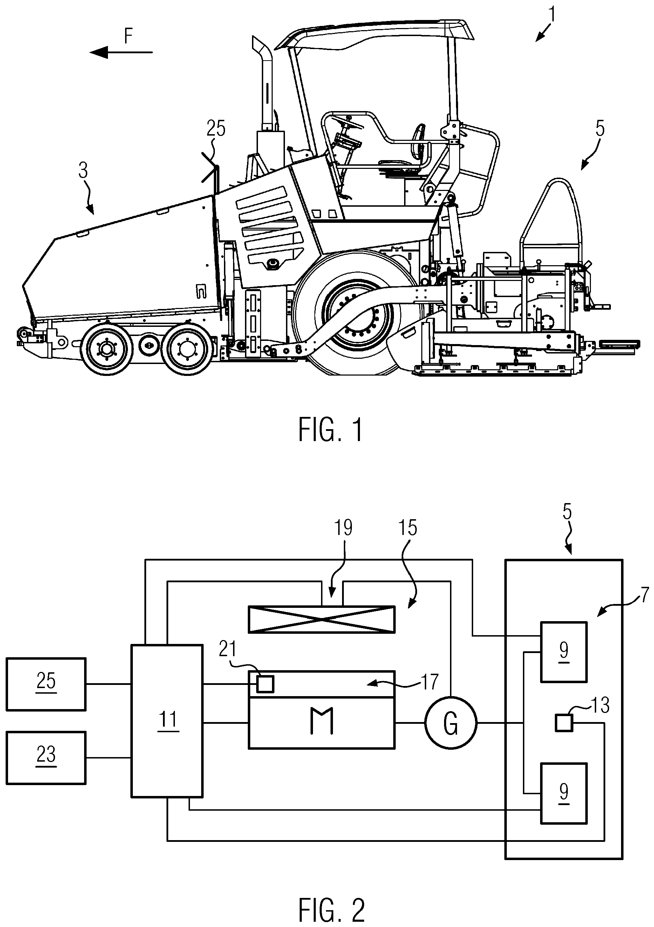

Figur 1 zeigt einen Straßenfertiger 1, der mit einem Verfahren gemäß einer Ausführungsform gesteuert wird. Der Straßenfertiger 1 umfasst einen in Einbaufahrtrichtung F vorne gelegenen Gutbunker 3 zur Aufnahme von Einbaugut. Zudem umfasst der Straßenfertiger 1 eine in Einbaufahrtrichtung F hinten gelegene Einbaubohle 5 zum Verdichten und Glätten des Einbauguts. Im Einbaubetrieb wird Einbaugut aus dem Gutbunker 3 entgegen der Einbaufahrtrichtung F nach hinten gefördert und der Einbaubohle 5 vorgelegt. Der Straßenfertiger 1 umfasst ein Primärantriebsaggregat M (siehe Figur 2), im vorliegenden Fall einen insbesondere als Dieselmotor ausgebildeten Verbrennungsmotor. Das Primärantriebsaggregat M stellt Energie für den Fahrantrieb, für Antriebe für Arbeitskomponenten des Straßenfertigers 1 und für weitere Energieverbraucher des Straßenfertigers 1 bereit.

An der Einbaubohle 5 ist eine Bohlenheizung 7 vorgesehen, welche in der gezeigten Ausführungsform zwei elektrische Widerstandsheizelemente 9 zum Beheizen der Einbaubohle 5 umfasst. Die Bohlenheizung 7 wird von dem Primärantriebsaggregat M mit Energie versorgt. Hierzu wird ein Generator G von dem Primärantriebsaggregat M betrieben und erzeugt elektrische Leistung zur Versorgung der Bohlenheizung 7. Es ist denkbar, dass auch weitere elektrische Verbraucher des Straßenfertigers 1 über den Generator G mit elektrischer Energie versorgt werden.

Im normalen Einbaubetrieb des Straßenfertigers 1 wird die Bohlenheizung 7 nach einem Regelschema betrieben, um sicherzustellen, dass die Einbaubohle 5 immer eine ausreichende Temperatur aufweist, um ein Erkalten des Einbauguts an der Einbaubohle 5 zu verhindern, welches zu einem Ankleben des Einbauguts an die Einbaubohle 5 führen könnte. Eine Steuerung 11 des Straßenfertigers 1 empfängt ein Ausgabesignal eines an der Einbaubohle 5 vorgesehenen Temperatursensors 13 und führt basierend auf dem empfangenen Ausgabesignal im normalen Einbaubetrieb des Straßenfertigers 1 die Regelung der Bohlenheizung 7 durch. Die Temperatur der Einbaubohle 5 kann durch geeignetes Regeln der Bohlenheizung 7 auf einen vorbestimmten Bohlen-Betriebstemperatur-wert geregelt werden. Hierzu kann die Steuerung 11 die Bohlenheizung 7 abhängig von dem von dem Temperatursensor 13 empfangenen Ausgabesignal in einem Regelkreis wahlweise aktivieren oder deaktivieren. Um ein häufiges An- und Abschalten der Bohlenheizung 7 zu vermeiden, kann es sinnvoll sein, die Temperatur der Einbaubohle 5 nicht auf einen Bohlen-Betriebstemperaturwert, sondern in einen vorbestimmten Bohlen-Betriebstemperaturbereich zu regeln, der eine gewisse Temperaturbandbreite erlaubt. Beispielsweise kann die Steuerung 11 die Bohlenheizung 7 aktivieren, wenn das Ausgabesignal des Temperatursensors 13 angibt, dass ein unterer Temperaturschwellenwert unterschritten wird, und die Bohlenheizung 7 deaktivieren, wenn das Ausgabesignal des Temperatursensors 13 angibt, dass ein oberer Temperaturschwellenwert überschritten wird.

Der Straßenfertiger 1 umfasst des Weiteren ein Kühlsystem 15, welches zur Kühlung verschiedener Komponenten des Straßenfertigers 1 ausgelegt sein kann. In Figur 2 ist das Kühlsystem 15 als Kühlsystem zum Kühlen des Primärantriebsaggregats M dargestellt. Es wäre aber auch denkbar, dass das Kühlsystem 15 zusätzlich oder alternativ andere Komponenten des Straßenfertigers 1 kühlt, beispielsweise ein Hydrauliksystem. Das Kühlsystem 15 umfasst ein Kühlmedium 17, das in Wärmeaustausch mit der zu kühlenden Komponente des Straßenfertigers 1 steht. Im Fall der Kühlung des Primärantriebsaggregats M umfasst das Kühlmedium 17 eine Kühlflüssigkeit eines Motorkühlsystems. In anderen Anwendungen kann das Kühlmedium 17 aber beispielsweise auch als Kühlkörper ausgebildet sein. Das Kühlsystem 15 umfasst zudem einen Lüfter 19 zum Erzeugen eines Kühlluftstroms zum Kühlen des Kühlmediums 17. Der Lüfter 19 wird über den Generator G mit elektrischer Energie betrieben, wird also letztendlich ebenfalls von dem Primärantriebsaggregat M, welches den Generator G antreibt, mit Energie versorgt.

Im normalen Einbaubetrieb des Straßenfertigers 1 wird eine Temperatur des Kühlmediums 17 durch Regeln des Lüfters 19 mittels der Steuerung 11 des Straßenfertigers 1 geregelt. Die Steuerung 11 kann den Lüfter 19 hierzu wahlweise aktivieren oder deaktivieren, oder aber auch eine Drehzahl des Lüfters 19 geeignet anpassen. Die Steuerung 11 empfängt ein Ausgabesignal eines Temperatursensors 21, der die Temperatur des Kühlmediums 17 bestimmt. Basierend auf diesem Ausgabesignal kann die Steuerung 11 den Lüfter 19 so regeln, dass die Temperatur des Kühlmediums 17 auf einen vorbestimmten Kühlmedium-Betriebstemperaturwert geregelt wird. Um ein glatteres Regelverhalten zu erreichen, kann die Temperatur des Kühlmediums 17 auch in einen vorbestimmten Kühlmedium-Betriebstemperaturbereich mit einer gewissen Breite geregelt werden.

Erfindungsgemäß wird ein zukünftiger Betriebszustand erhöhten Energiebedarfs des Straßenfertigers 1 vorausschauend erkannt und bei der Steuerung des Straßenfertigers 1 berücksichtigt. Ein solcher Betriebszustand erhöhten Energiebedarfs ist ein Betriebszustand, in dem zumindest eine von dem Primärantriebsaggregat M versorgter Komponente des Straßenfertigers 1 einen erhöhten Energiebedarf aufweist und/oder zusätzlich aktiviert werden muss. Ein Beispiel für einen Betriebszustand erhöhten Energiebedarfs ist ein Bergauffahren des Straßenfertigers 1, bei dem der Fahrantrieb des Straßenfertigers 1 einen erhöhten Energiebedarf hat. Auch zu Beginn eines Einbauvorgangs tritt ein erhöhter Energiebedarf auf. Zu Beginn des Einbauvorgangs muss beispielsweise zur Beschleunigung des Straßenfertigers 1 und zum Starten des Materialstroms von Einbaugut aus dem Gutbunker 3 in den hinteren Bereich des Straßenfertigers 1 vermehrt Energie aufgewandt werden.

Ein zukünftiger Betriebszustand erhöhten Energiebedarfs kann auf unterschiedliche Art und Weise vorausgesehen werden. Beispielsweise kann die Steuerung 11 des Straßenfertigers 1 auf Planungsdaten oder Streckendaten des jeweiligen Bauvorhabens zurückgreifen und daraus ein zukünftiges Bergauffahren des Straßenfertigers 1 oder andere relevante Betriebssituationen voraussehen. Die Planungs- oder Streckendaten könnten beispielsweise im Straßenfertiger 1 selbst gespeichert sein oder dem Straßenfertiger 1 über ein Kommunikationsmodul 23 zugeführt werden.

Um einen Beginn eines Einbauvorgangs (auf einer neuen Baustelle oder nach einer Einbauunterbrechung) vorausschauend zu erkennen, kann beispielsweise eine voraussichtliche Ankunftszeit eines LKWs zum Beschicken des Straßenfertigers 1 mit Einbaugut erkannt werden. Die Ankunftszeit des LKWs könnte der Steuereinrichtung 11 von einem übergeordneten Baustellenorganisationssystem über das Kommunikationsmodul 23 übermittelt werden. Es wäre aber auch denkbar, dass der Straßenfertiger 1 eine LKW-Detektionseinrichtung 25 umfasst, die das Anfahren des LKWs optisch erfasst. Auch ein Erfassen einer voraussichtlichen Ankunftszeit des LKWs durch Kommunikation zwischen dem LKW und dem Straßenfertiger 1 ist denkbar.

Es sind auch andere Varianten denkbar, wie ein zukünftiger Betriebszustand erhöhten Energiebedarfs des Straßenfertigers 1 vorausschauend erkannt werden kann. Vorzugsweise wird dabei jeweils auch ein voraussichtlicher Eintrittszeitpunkt des Betriebszustands erhöhten Energiebedarfs erkannt, insbesondere abgeschätzt.

Wenn ein zukünftiger Betriebszustand erhöhten Energiebedarfs erkannt wurde, werden Maßnahmen getroffen, um die erwartete Leistungsspitze abfangen zu können. In der nachfolgend beschriebenen Ausführungsform umfassen diese Maßnahmen sowohl ein Anpassen des Betriebs der Bohlenheizung 7 als auch ein Anpassen des Betriebs des Kühlsystems 15. Es wäre aber auch denkbar, lediglich die Bohlenheizung 7 oder alternativ das Kühlsystem 15 angepasst zu betreiben.

Wenn ein zukünftiger Betriebszustand erhöhten Energiebedarfs erkannt wurde, wird vor dem voraussichtlichen Eintrittszeitpunkt des Betriebszustands erhöhten Energiebedarfs die Bohlenheizung 7 von der Steuerung 11 zum Beheizen der Einbaubohle 5 über den für die Regelung im normalen Einbaubetrieb relevanten vorbestimmten Bohlen-Betriebstemperaturwert oder Bohlen-Betriebstemperaturbereich hinaus angesteuert. Die Einbaubohle 5 wird vor Eintritt des Betriebszustands erhöhten Energiebedarfs also gewissermaßen überheizt. Es versteht sich, dass dieses Überheizen in einem Rahmen erfolgt, der sicherstellt, dass die Einbaubohle 5 nicht durch Überhitzung beschädigt wird.

Zudem wird, wenn der zukünftige Betriebszustand erhöhten Energiebedarfs erkannt wurde, der Betrieb des Lüfters 19 des Kühlsystems 15 angepasst. Vor dem voraussichtlichen Eintrittszeitpunkt des Betriebszustands erhöhten Energiebedarfs steuert die Steuerung 11 des Straßenfertigers 1 den Lüfter 19 zum verstärkten Kühlen des Kühlmediums 17 unter den für die Regelung im normalen Einbaubetrieb des Straßenfertigers 1 relevanten Kühlmedium-Betriebstemperaturwert oder Kühlmedium-Betriebstemperaturbereich. Das Kühlmedium 17 wird somit vor Eintritt des Betriebszustands erhöhten Energiebedarfs unterkühlt.

Es wird also, wenn ein zukünftiger Betriebszustand erhöhten Energiebedarfs des Straßenfertigers 1 erkannt wird, gewissermaßen Energie auf Vorrat in das Beheizen der Einbaubohle 5 und das Kühlen des Kühlmediums 17 gesteckt. Bei Eintritt des Betriebszustands erhöhten Energiebedarfs (tatsächlicher Eintritt oder Erreichen des ermittelten voraussichtlichen Eintrittszeitpunkts) werden dann die Bohlenheizung 7 und der Lüfter 19 deaktiviert. Somit wird die Last des Primärantriebsaggregats M verringert und die Leistungsspitze bei Eintritt des Betriebszustands erhöhten Energiebedarfs abgefangen. Dieses Vorgehen nutzt die Wärmekapazität der Einbaubohle 5 und die Wärmekapazität des Kühlmediums 17 gewissermaßen als Puffer, um die Bohlenheizung 7 und den Lüfter 19 temporär deaktivieren zu können.

Es wäre denkbar, die Bohlenheizung 7 und den Lüfter 19 wieder zum Aktivieren freizugeben, wenn der Betriebszustand erhöhten Energiebedarfs vorüber ist. Wenn nötig, können die Bohlenheizung 7 und der Lüfter 19 aber auch früher wieder aktiviert werden.

Vorzugsweise wird die Temperatur der Einbaubohle 5 durch den Temperatursensor 13 auch während des Betriebszustands erhöhten Energiebedarfs weiter überwacht. Um ein zu starkes Abkühlen der Einbaubohle 5 zu verhindern, kann die Bohlenheizung 7 wieder aktiviert werden, wenn der Temperatursensor 13 meldet, dass der vorbestimmte Bohlen-Betriebstemperaturwert oder der vorbestimmte Bohlen-Betriebstemperaturbereich unterschritten wird.

Auf analoge Art und Weise kann der Temperatursensor 21 die Temperatur des Kühlmediums 17 auch während des Betriebszustands erhöhten Energiebedarfs weiter überwachen. Der Lüfter 19 kann wieder aktiviert werden, wenn der vorbestimmte Kühlmedium-Betriebstemperaturwert oder der vorbestimmte Kühlmedium-Betriebstemperaturbereich überschritten wird, um ein Überhitzen des Kühlmediums 17 zu verhindern.

## Patentansprüche

1. Verfahren zum Steuern eines Straßenfertigers (1) mit einem Primärantriebsaggregat (M), einem in Einbaufahrtrichtung (F) vorne gelegenen Gutbunker (3) und einer in Einbaufahrtrichtung (F) hinten gelegenen Einbaubohle (5) mit einer Bohlenheizung (7), welche durch von dem Primärantriebsaggregat (M) erzeugte Energie betreibbar ist, umfassend:
Betreiben der Bohlenheizung (7) zum Beheizen der Einbaubohle (5) im Einbaubetrieb des Straßenfertigers (1) durch Regeln einer Temperatur der Einbaubohle (5) auf einen vorbestimmten Bohlen-Betriebstemperaturwert oder in einen vorbestimmten Bohlen-Betriebstemperaturbereich;
vorausschauendes Erkennen eines zukünftigen Betriebszustandes erhöhten Energiebedarfs des Straßenfertigers (1) durch den Straßenfertiger (1),
**gekennzeichnet durch**
Betreiben der Bohlenheizung (7) zum Überheizen der Einbaubohle (5) durch Beheizen der Einbaubohle (5) über den vorbestimmten Bohlen-Betriebstemperaturwert oder den vorbestimmten Bohlen-Betriebstemperaturbereich hinaus, wenn ein zukünftiger Betriebszustand erhöhten Energiebedarfs erkannt wurde; und
zumindest vorübergehendes Deaktivieren der Bohlenheizung (7) bei Eintritt des Betriebszustands erhöhten Energiebedarfs, um das Primärantriebsaggregat (M) zu entlasten.

2. Verfahren nach Anspruch 1, wobei das vorausschauende Erkennen des zukünftigen Betriebszustands erhöhten Energiebedarfs das Erkennen eines voraussichtlichen Eintrittszeitpunkts des Betriebszustands erhöhten Energiebedarfs umfasst.

3. Verfahren nach Anspruch 2, wobei das Betreiben der Bohlenheizung (7) zum Beheizen der Einbaubohle (5) über den vorbestimmten Bohlen-Betriebstemperaturwert oder den vorbestimmten Bohlen-Betriebstemperaturbereich hinaus vor dem voraussichtlichen Eintrittszeitpunkt des Betriebszustands erhöhten Energiebedarfs startet.

4. Verfahren nach Anspruch 2 oder 3, wobei eine Startzeit des Betreibens der Bohlenheizung (7) zum Beheizen der Einbaubohle (5) über den vorbestimmten Bohlen-Betriebstemperaturwert oder den vorbestimmten Bohlen-Betriebstemperaturbereich hinaus basierend auf dem voraussichtlichen Eintrittszeitpunkt des Betriebszustands erhöhten Energiebedarfs bestimmt wird.

5. Verfahren nach einem der vorangehenden Ansprüche, wobei die Bohlenheizung (7) nach dem Deaktivieren wieder zum Aktivieren freigegeben wird, wenn der Betriebszustand erhöhten Energiebedarfs vorüber ist.

6. Verfahren nach einem der vorangehenden Ansprüche, wobei die Bohlenheizung (7) nach dem Deaktivieren wieder aktiviert wird, wenn der vorbestimmte Bohlen-Betriebstemperaturwert oder der vorbestimmte Bohlen-Betriebstemperaturbereich unterschritten wird.

7. Verfahren nach Anspruch 1, wobei der Straßenfertiger (1) zudem ein Kühlsystem (15) mit einem Kühlmedium (17) und einem Lüfter (19) zum Erzeugen eines Kühlluftstroms zum Kühlen des Kühlmediums (17) aufweist, wobei der Lüfter (19) durch von dem Primärantriebsaggregat (M) erzeugte Energie betreibbar ist, und wobei das Verfahren Folgendes umfasst:
Betreiben des Lüfters (19) im Einbaubetrieb des Straßenfertigers (1), so dass eine Temperatur des Kühlmediums (17) auf einen vorbestimmten Kühlmedium-Betriebstemperaturwert oder in einen vorbestimmten Kühlmedium-Betriebstemperaturbereich geregelt wird;
Betreiben des Lüfters (19) zum Kühlen des Kühlmediums (17) unter den vorbestimmten Kühlmedium-Betriebstemperaturwert oder den vorbestimmten Kühlmedium-Betriebstemperaturbereich, wenn ein zukünftiger Betriebszustand erhöhten Energiebedarfs erkannt wurde; und
zumindest vorübergehendes Deaktivieren des Lüfters (19) bei Eintritt des Betriebszustands erhöhten Energiebedarfs.

8. Verfahren nach Anspruch 7, wobei das vorausschauende Erkennen des zukünftigen Betriebszustands erhöhten Energiebedarfs das Erkennen eines voraussichtlichen Eintrittszeitpunkts des Betriebszustands erhöhten Energiebedarfs umfasst.

9. Verfahren nach Anspruch 8, wobei das Betreiben des Lüfters (19) zum Kühlen des Kühlmediums unter den vorbestimmten Kühlmedium-Betriebstemperaturwert oder den vorbestimmten Kühlmedium-Betriebstemperaturbereich vor dem voraussichtlichen Eintrittszeitpunkt des Betriebszustands erhöhten Energiebedarfs startet.

10. Verfahren nach Anspruch 8 oder 9, wobei eine Startzeit des Betreibens des Lüfters (19) zum Kühlen des Kühlmediums unter den vorbestimmten Kühlmedium-Betriebstemperaturwert oder den vorbestimmten Kühlmedium-Betriebstemperaturbereich basierend auf dem voraussichtlichen Eintrittszeitpunkt des Betriebszustands erhöhten Energiebedarfs bestimmt wird.

11. Verfahren nach einem der Ansprüche 7 bis 10, wobei der Lüfter (19) nach dem Deaktivieren wieder zum Aktivieren freigegeben wird, wenn der Betriebszustand erhöhten Energiebedarfs vorüber ist.

12. Verfahren nach einem der der Ansprüche 7 bis 11, wobei der Lüfter (19) nach dem Deaktivieren wieder aktiviert wird, wenn der vorbestimmte Kühlmedium-Betriebstemperaturwert oder der vorbestimmte Kühlmedium-Betriebstemperaturbereich überschritten wird.

13. Verfahren nach einem der vorangehenden Ansprüche, wobei der zukünftige Betriebszustand erhöhten Energiebedarfs einen Beginn eines Einbauvorgangs oder ein Bergauffahren des Straßenfertigers (1) umfasst.

14. Verfahren nach einem der vorangehenden Ansprüche, wobei das vorausschauende Erkennen des zukünftigen Betriebszustands erhöhten Energiebedarfs das Erkennen oder Empfangen einer voraussichtlichen Ankunftszeit eines LKWs zum Beschicken des Straßenfertigers (1) mit Einbaugut umfasst.

15. Verfahren nach einem der vorangehenden Ansprüche, wobei das vorausschauende Erkennen des zukünftigen Betriebszustands erhöhten Energiebedarfs ein Erhalten oder Auswerten von Planungs- oder Streckendaten umfasst.

## Claims

1. Method for controlling a road finisher (1) having a primary drive unit (M), a material hopper (3) located at the front in the paving direction (F), and a paving screed (5) located at the rear in the paving direction (F) and having a screed heating system (7) which can be operated by energy generated by the primary drive unit (M), comprising:
operating the screed heating system (7) for heating the paving screed (5) during paving operation of the road finisher (1) by controlling a temperature of the paving screed (5) to a predetermined screed operating temperature value or to a predetermined screed operating temperature range;
foresighted recognition of a future operating state of increased energy demand of the road finisher (1) by the road finisher (1),
**characterized by**
operating the screed heating system (7) to overheat the paving screed (5) by heating the paving screed (5) beyond the predetermined screed operating temperature value or the predetermined screed operating temperature range when a future operating state of increased energy demand has been detected; and
at least temporary deactivation of the screed heating system (7) when the operating state of increased energy demand is reached to relieve the primary drive unit (M).

2. Method according to claim 1, wherein the foresighted recognition of the future operating state of increased energy demand comprises the recognition of an expected time of occurrence of the operating state of increased energy demand.

3. Method according to claim 2, wherein operation of the screed heating system (7) to heat the screed (5) beyond the predetermined screed operating temperature value or the predetermined screed operating temperature range starts before the expected time of occurrence of the operating state of increased energy demand.

4. Method according to claim 2 or 3, wherein a start time of operating the screed heating system (7) for heating the screed (5) beyond the predetermined screed operating temperature value or the predetermined screed operating temperature range is determined based on the estimated time of occurrence of the operating state of increased energy demand.

5. Method according to one of the preceding claims, wherein the screed heating system (7) is released for activation again after deactivation when the operating state of increased energy demand is over.

6. Method according to one of the preceding claims, wherein the screed heating system (7) is reactivated after deactivation if the predetermined screed operating temperature value or the predetermined screed operating temperature range is undershot.

7. Method according to claim 1, wherein the road finisher (1) further has a cooling system (15) having a cooling medium (17) and a fan (19) for generating a cooling air flow for cooling the cooling medium (17), wherein the fan (19) can be operated by energy generated by the primary drive unit (M), the method comprising:
operating the fan (19) during paving operation of the road finisher (1) so that a temperature of the cooling medium (17) is controlled to a predetermined cooling medium operating temperature value or to a predetermined cooling medium operating temperature range;
operating the fan (19) to cool the cooling medium (17) below the predetermined cooling medium operating temperature value or the predetermined cooling medium operating temperature range if a future operating state of increased energy demand has been detected; and
at least temporary deactivation of the fan (19) when the operating state of increased energy demand occurs.

8. Method according to claim 7, wherein the foresighted recognition of the future operating state of increased energy demand comprises the recognition of an expected time of occurrence of the operating state of increased energy demand.

9. Method according to claim 8, wherein operation of the fan (19) to cool the cooling medium below the predetermined cooling medium operating temperature value or the predetermined cooling medium operating temperature range starts prior to the expected time of occurrence of the operating state of increased energy demand.

10. Method according to claim 8 or 9, wherein a start time of operating the fan (19) to cool the cooling medium below the predetermined cooling medium operating temperature value or the predetermined cooling medium operating temperature range is determined based on the expected time of occurrence of the operating state of increased energy demand.

11. Method according to one of claims 7 to 10, wherein the fan (19) is released for reactivation after deactivation when the operating state of increased energy demand is over.

12. Method according to one of claims 7 to 11, wherein the fan (19) is reactivated after deactivation when the predetermined cooling medium operating temperature value or the predetermined cooling medium operating temperature range is exceeded.

13. Method according to one of the preceding claims, wherein the future operating state of increased energy demand comprises start of a paving operation or driving the road finisher (1) uphill.

14. Method according to one of the preceding claims, wherein the foresighted detection of the future operating state of increased energy demand comprises detecting or receiving an estimated time of arrival of a truck for supplying the road finisher (1) with paving material.

15. Method according to one of the preceding claims, wherein the foresighted recognition of the future operating state of increased energy demand comprises obtaining or evaluating planning or route data.

## Revendications

1. Procédé de commande d'un finisseur (1) avec un groupe d'entraînement primaire (M), une trémie (3) disposée à l'avant en direction d'avancement de pose (F), et une poutre lisseuse (5) disposée à l'arrière en direction d'avancement de pose (F), avec un chauffage de poutre (7) alimenté par de l'énergie fournie par le groupe d'entraînement primaire (M), comprenant :
l'utilisation du chauffage de poutre (7) pour chauffer la poutre lisseuse (5) durant le processus de pose du finisseur (1) par la régulation de la température de la poutre lisseuse (5) à une valeur prédéterminée de température de service de la poutre ou dans une plage prédéterminée de température de service de la poutre ;
la détection prévisionnelle d'une future augmentation de consommation d'énergie par un état de fonctionnement du finisseur (1) par le finisseur (1),
**caractérisé par**
la commande du chauffage de poutre (7) pour surchauffer la poutre lisseuse (5) par la chauffe de la poutre lisseuse (5) au-delà de la valeur prédéterminée de température de service de la poutre ou au-delà de la plage prédéterminée de température de service de la poutre quand une future augmentation de consommation d'énergie du fait d'un état de fonctionnement est détectée ; et
la désactivation au moins temporaire du chauffage de poutre (7) lors de l'occurrence de l'augmentation de consommation d'énergie du fait d'un état de fonctionnement pour décharger le groupe d'entraînement primaire (M).

2. Procédé selon la revendication 1, dans lequel la détection prévisionnelle de la future augmentation de consommation d'énergie du fait d'un état de fonctionnement comprend la détection d'un point temporel de début prévisionnel de l'augmentation de consommation d'énergie du fait d'un état de fonctionnement.

3. Procédé selon la revendication 2, dans lequel la commande du chauffage de poutre (7) pour chauffer la poutre lisseuse (5) au-delà de la valeur prédéterminée de température de service de la poutre ou de la plage prédéterminée de température de service de la poutre commence avant le point temporel de début prévisionnel de l'augmentation de consommation d'énergie du fait d'un état de fonctionnement.

4. Procédé selon la revendication 2 ou 3, dans lequel un temps de début de la commande du chauffage de poutre (7) pour chauffer la poutre lisseuse (5) au-delà de la valeur prédéterminée de température de service de la poutre ou de la plage prédéterminée de température de service de la poutre est déterminé sur base du point temporel de début prévisionnel de l'augmentation de consommation d'énergie du fait d'un état de fonctionnement.

5. Procédé selon l'une des revendications précédentes, dans lequel le chauffage de poutre (7) est libéré pour être réactivé après la désactivation quand l'augmentation de consommation d'énergie du fait d'un état de fonctionnement est dépassée.

6. Procédé selon l'une des revendications précédentes, dans lequel le chauffage de poutre (7) est réactivé après la désactivation lorsque la température descend sous la valeur prédéterminée de température de service de la poutre ou sous la plage prédéterminée de température de service de la poutre.

7. Procédé selon la revendication 1, dans lequel le finisseur (1) comporte en outre un système de refroidissement (15) avec un fluide de refroidissement (17) et un ventilateur (19) entraînable par de l'énergie produite par le groupe d'entraînement primaire (M) pour produire un flux d'air de refroidissement afin de refroidir le fluide de refroidissement (17), dans lequel le procédé comprend les étapes suivantes :
commande du ventilateur (19) lors du processus de pose du finisseur (1) de telle sorte que la température du fluide de refroidissement (17) est régulée à une valeur prédéterminée de température de service du fluide de refroidissement ou dans une plage prédéterminée de température de service du fluide de refroidissement ;
commande du ventilateur (19) pour refroidir le fluide de refroidissement (17) à une température inférieure à la valeur prédéterminée de température de service du fluide de refroidissement ou à la plage prédéterminée de température de service du fluide de refroidissement quand une future augmentation de consommation d'énergie du fait d'un état de fonctionnement est détectée ; et
désactivation au moins temporaire du ventilateur (19) lors de l'occurrence de l'augmentation de consommation d'énergie du fait d'un état de fonctionnement.

8. Procédé selon la revendication 7, dans lequel la détection prévisionnelle de la future augmentation de consommation d'énergie du fait d'un état de fonctionnement comprend la détection d'un point temporel de début prévisionnel de l'augmentation de consommation d'énergie du fait d'un état de fonctionnement.

9. Procédé selon la revendication 8, dans lequel la commande du ventilateur (19) pour refroidir le fluide de refroidissement sous la valeur prédéterminée de température de service du fluide de refroidissement ou sous la plage prédéterminée de température de service du fluide de refroidissement avant le point temporel de début prévisionnel de l'augmentation de consommation d'énergie du fait d'un état de fonctionnement.

10. Procédé selon la revendication 8 ou 9, dans lequel un temps de début de la commande du ventilateur (19) pour refroidir le fluide de refroidissement sous la valeur prédéterminée de température de service du fluide de refroidissement ou sous la plage prédéterminée de température de service du fluide de refroidissement sur base du point temporel de début prévisionnel de l'augmentation de consommation d'énergie du fait d'un état de fonctionnement est déterminé.

11. Procédé selon l'une des revendications 7 à 10, dans lequel le ventilateur (19) est libéré pour être réactivé après la désactivation quand l'augmentation de consommation d'énergie du fait d'un état de fonctionnement est dépassée.

12. Procédé selon l'une des revendications 7 à 11, dans lequel le ventilateur (19) est réactivé après la désactivation quand la valeur prédéterminée de température de service du fluide de refroidissement ou la plage de température de service prédéterminée du fluide de refroidissement est dépassée.

13. Procédé selon l'une des revendications précédentes, dans lequel la future augmentation de consommation d'énergie du fait d'un état de fonctionnement comprend le début d'un procédé de pose ou une montée de pente du finisseur (1).

14. Procédé selon l'une des revendications précédentes, dans lequel la détection prévisionnelle de la future augmentation de consommation d'énergie du fait d'un état de fonctionnement comporte la détection ou la réception d'un temps d'arrivée prévisionnel d'un camion pour charger le finisseur (1) avec le matériau à poser.

15. Procédé selon l'une des revendications précédentes, dans lequel la détection prévisionnelle de la future augmentation de consommation d'énergie du fait d'un état de fonctionnement comprend la détection ou l'évaluation de données de planification ou de routage.
